# FASCICULE DE BREVET EUROPEEN

(11) **EP 3 227 586 B1**
(45) Date de publication et mention de la délivrance du brevet: **02.01.2019**
(21) Numéro de dépôt: 15808717.1
(22) Date de dépôt: 12.11.2015
(51) Int. Cl.: F16H 61/4035, F16H 61/4096, F16H 61/4104, F16H 61/4131

(54) **CIRCUIT HYDRAULIQUE COMPRENANT UN DRAIN DE MACHINE HYDRAULIQUE ÉQUIPÉ D'UN MOYEN DE CONTRÔLE DU DÉBIT ET DES FONCTIONS DE TRAITEMENT DE FLUIDE**
HYDRAULIKSCHALTUNG MIT HYDRAULIKMASCHINENABFLUSS MIT FLUSSKONTROLLE UND FLUIDBEHANDLUNGSFUNKTIONEN
HYDRAULIC CIRCUIT INCLUDING A HYDRAULIC MACHINE DRAIN PROVIDED WITH A FLOW-CONTROL MEANS AND FLUID-TREATMENT FUNCTIONS

(30) Priorité: 04.12.2014 FR 1461895
(43) Date de publication de la demande: 11.10.2017
(73) Titulaire: Technoboost, 75116 Paris (FR)
(72) Inventeur: LE DREN, Arnaud, F-91800 Brunoy (FR); YARCE, Andres, F-92000 Nanterre (FR)
(74) Mandataire: Fernandez, Francis Lionel
(86) Numéro de dépôt international: PCT/FR2015/053057
(87) Numéro de publication internationale: WO 2016/087735

(56) Documents cités:
- EP-A1- 2 131 073
- US-A1- 2004 103 656
- US-A1- 2010 097 040

## Description

La présente invention concerne un circuit hydraulique, en particulier pour la traction d'un véhicule automobile hybride, un procédé de contrôle de ce circuit hydraulique, ainsi qu'un véhicule automobile hybride comprenant un tel circuit hydraulique.

Un type de transmission connu pour un véhicule automobile hybride hydraulique, présenté notamment par le document FR-A1-2973302, comporte un train planétaire comprenant trois éléments reliés à un moteur thermique, à une pompe hydraulique et à un différentiel entraînant les roues motrices. La transmission reçoit une machine hydraulique pouvant travailler en moteur ou en pompe, qui peut être reliée au différentiel par plusieurs rapports de démultiplication.

Le circuit hydraulique comporte un circuit basse pression et un circuit haute pression comprenant chacun un accumulateur de pression qui permet de stocker une énergie, l'accumulateur basse pression maintenant un seuil de pression minimum pour éviter une cavitation des machines. Les fluides sous pression stockés sont restitués ensuite pour appliquer un couple moteur sur les roues. En variante le circuit basse pression peut comporter une pompe de gavage qui maintient un niveau minimum de pression.

On obtient ainsi différents modes de fonctionnement comprenant une traction du véhicule uniquement par la machine hydraulique, le moteur thermique étant arrêté, et une traction par le moteur thermique qui délivre par le train planétaire un couple à la fois sur le différentiel, et sur la pompe fournissant une puissance hydraulique. On peut ajouter dans ce dernier mode un couple complémentaire de traction donné par la machine hydraulique.

On obtient aussi un mode « rapport court » avec la pompe arrêtée, le moteur thermique délivrant un couple élevé sur les roues motrices par le train planétaire formant un réducteur de vitesse, et un mode « rapport long » avec le moteur thermique délivrant un couple plus faible sur les roues motrices par le train planétaire qui est bloqué. On obtient de plus un mode « freinage » où la machine hydraulique travaillant en pompe délivre un couple de freinage du véhicule, en rechargeant l'accumulateur haute pression.

Par ailleurs les machines hydrauliques de puissance génèrent lors du fonctionnement des calories produites par les pertes internes, causant un échauffement du fluide. On dispose généralement un échangeur thermique sur le flux principal de fluide délivrant la puissance aux différentes machines hydrauliques.

Cette disposition nécessite un échangeur de présentant des dimensions suffisamment importantes pour limiter la perte de charge sur un débit élevé, ce qui entraîne un encombrement et une masse assez grands, alors que sur les véhicules on veut réduire ces paramètres pour diminuer la consommation d'énergie. De plus le coût de ce filtre de grande dimension est aussi élevé.

De plus on peut avoir un problème de pollution interne du circuit, en particulier des machines hydrauliques, venant de matières introduites dans le circuit lors de sa fabrication, ou des particules générées par l'usure des composants internes. Cette pollution entraîne un vieillissement plus rapide des organes, et peut causer des défaillances.

Pour éliminer les impuretés du fluide on dispose généralement aussi un filtre dans le flux principal de puissance du circuit hydraulique, qui comporte obligatoirement un unique sens de passage de ce fluide.

Cependant dans le cas d'un circuit comprenant des machines hydrauliques travaillant en rotation dans les deux directions, comme pour la transmission du véhicule hybride présentée par le document de l'art antérieur cité ci-dessus, le sens unique de passage dans le filtre peut nécessiter des composants qui redressent ce sens, notamment un agencement de plusieurs clapets anti-retour, ce qui ajoute un encombrement, une masse et des coûts.

Par ailleurs le filtre généralement monté sur le flux principal du circuit hydraulique, doit comporter une dimension importante pour éviter une perte de charge trop forte sur ce débit qui peut être élevé. Le document US 2004/103656 A divulgue des exemples de circuits hydrauliques selon le préambule des revendications 1 et 7.

La présente invention a notamment pour but d'éviter ces inconvénients de la technique antérieure.

Elle propose à cet effet un circuit hydraulique disposant d'au moins une machine hydraulique de puissance reliée à un circuit basse pression et à un circuit haute pression transmettant cette puissance, la machine étant équipée d'un drain qui permet un écoulement de fuites internes dans son carter vers un accumulateur basse pression ou un réservoir à la pression atmosphérique, caractérisé en ce qu'il comporte un conduit d'entrée reliant le circuit basse pression au carter de la machine, et un conduit de sortie formant le drain recevant le débit du conduit d'entrée pour le conduire au réservoir, comprenant un échangeur thermique et un filtre formant les éléments de traitement du fluide pour la totalité du circuit hydraulique, ce circuit comportant de plus un moyen de contrôle du débit dans les conduits d'entrée et de sortie.

Un avantage de ce circuit hydraulique est qu'avec le moyen de contrôle du débit du drain passant par les conduits d'entrée et de sortie, on peut imposer et contrôler un flux de fluide suffisant, indépendant du débit principal de puissance, qui traverse le carter de la machine hydraulique pour à la fois refroidir et balayer l'intérieur de cette machine, ainsi que pour traiter la globalité du fluide du circuit hydraulique comprenant le refroidissement et la filtration.

On obtient ainsi une boucle de drain présentant un petit débit par rapport au flux principal de puissance, réalisant en même temps plusieurs fonctions comprenant le drainage des cavités internes des machines hydrauliques, et le traitement de la totalité du fluide du circuit hydraulique, ce qui permet de disposer un nombre minimum de composants de dimensions réduites grâce au faible débit les traversant.

Selon l'invention telle que définie par la revendication 1, le circuit basse pression comportant un accumulateur basse pression, le moyen de contrôle du débit comprend une pompe motorisée disposée sur le conduit de sortie, qui débite dans cet accumulateur.

Dans ce cas le conduit d'entrée possède avantageusement un clapet anti-retour d'entrée empêchant le refoulement vers le circuit basse pression, pouvant comporter un ressort de tarage.

Avantageusement, le clapet anti-retour d'entrée comporte une position fermée dans les deux sens, qui peut être commandée.

Avantageusement, le circuit hydraulique comporte entre les machines hydrauliques et la pompe motorisée, une sortie vers l'extérieur fermée par une vanne, permettant une désaération du fluide.

En variante, le circuit hydraulique peut comporter un réservoir intermédiaire à la pression atmosphérique, disposé entre les machines hydrauliques et la pompe motorisée.

L'invention a aussi pour objet un procédé de contrôle d'un circuit hydraulique comprenant une pompe motorisée comme moyen de contrôle du débit d'une boucle de drainage, qui détecte avantageusement un colmatage du filtre en mesurant des caractéristiques de fonctionnement de cette pompe motorisée.

Selon l'invention telle que définie par la revendication 7, le circuit basse pression comportant un réservoir à la pression atmosphérique, le moyen de contrôle du débit comprend une vanne commandée disposée sur le conduit d'entrée.

Avantageusement la vanne commandée comporte une position de passage libre, et une position équipée d'un clapet anti-retour bloquant le passage vers les machines hydrauliques.

Avantageusement, le conduit de sortie comporte un clapet anti-retour de sortie disposé en sortie des machines hydrauliques, qui bloque un retour vers ces machines.

En particulier, le circuit hydraulique peut comporter plusieurs machines hydrauliques alimentées chacune par un conduit d'entrée indépendant venant directement du circuit basse pression.

L'invention a de plus pour objet un véhicule automobile hybride disposant d'une chaîne de traction utilisant l'énergie hydraulique, ce véhicule comportant un circuit hydraulique comprenant l'une quelconque des caractéristiques précédentes.

L'invention sera mieux comprise et d'autres caractéristiques et avantages apparaîtront plus clairement à la lecture de la description ci-après donnée à titre d'exemple, en référence aux dessins annexés dans lesquels :
- les figures 1 à 4 présentent un circuit hydraulique comprenant deux machines hydrauliques équipées de drains montés en série, réalisé selon l'invention ; et
- les figures 5 et 6 présentent des variantes de circuit hydraulique comprenant deux machines hydrauliques équipées de drains montés en parallèle.

D'une manière générale, les machines hydrauliques de puissance comportent de manière connue un drain relié au carter dans une zone basse pression, qui permet de récupérer un débit de fuite venant en particulier de la zone haute pression, pour l'évacuer vers un réservoir présentant une pression plus faible. Généralement le drain comporte un débit variable de fluide qui est non contrôlé, dépendant notamment de la différence de pression générant les fuites internes.

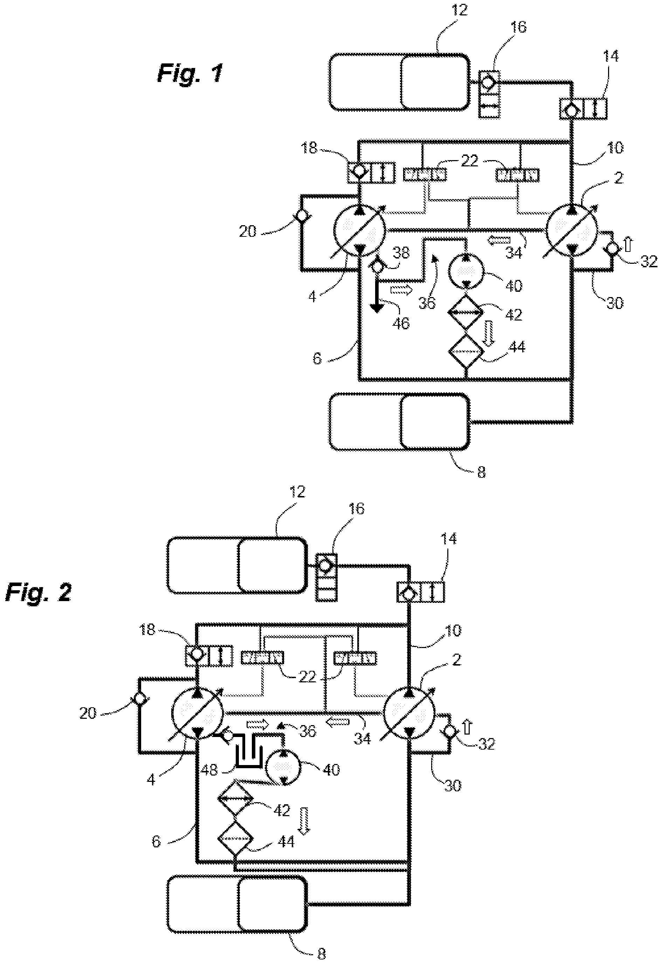

La figure 1 présente un circuit hydraulique d'un véhicule hybride comprenant une première 2 et une deuxième machine hydraulique 4 liées à une transmission du véhicule, qui sont reliées à un même circuit basse pression 6 comprenant un accumulateur basse pression 8.

En particulier pour les modes de fonctionnement habituels du véhicule hybride, la première machine hydraulique 2 fonctionne en moteur et la deuxième machine 4 en pompe, cette première machine recevant le fluide sous pression du réservoir haute pression 12, ou directement de la deuxième machine. Toutefois pour des modes particuliers, comme le freinage du véhicule ou une accélération maximum, ces deux machines 2, 4 peuvent fonctionner aussi à l'inverse.

La première machine hydraulique 2 est reliée directement à un circuit haute pression 10, qui alimente un accumulateur haute pression 12 par l'intermédiaire de deux vannes disposées en série 14, 16, comprenant chacune dans une position un clapet anti-retour monté en opposition l'un par rapport à l'autre, permettant de contrôler les débits d'entrée et de sortie dans cet accumulateur, et d'assurer la sécurité.

La deuxième machine hydraulique 4 est reliée au circuit haute pression 10 par l'intermédiaire d'une vanne 18, comprenant dans une position un clapet anti-retour permettant seulement un passage vers ce circuit haute pression. Cette deuxième machine hydraulique 4 reçoit en parallèle un clapet anti-retour de contournement 20, qui permet un passage libre du fluide vers le circuit haute pression 10.

Le circuit hydraulique comporte deux électrovannes 22 recevant le fluide du circuit haute pression 10, alimentant chacune la commande d'une des machines hydrauliques 2, 4.

Le circuit basse pression 6 comporte un conduit d'alimentation 30 alimentant le carter de la première machine hydraulique 2, comprenant un clapet anti-retour d'entrée 32 qui empêche un retour vers ce circuit basse pression.

Un conduit intermédiaire 34 relie ensuite les carter des deux machines hydrauliques, pour alimenter la deuxième machine 4 à partir de la première 2 recevant le débit du conduit d'alimentation 30.

En option le clapet anti-retour d'entrée 32 peut disposer d'un ressort de tarage qui impose une chute de pression en sortie de ce clapet, afin d'assurer une pression de drain dans les carters des machines hydrauliques 2, 4, qui est inférieure à celle dans le circuit basse pression 6.

Un conduit de sortie 36 reçoit le débit traversant le carter de la deuxième machine 4, pour le faire passer successivement par un clapet anti-retour de sortie 38 permettant seulement un passage dans ce sens, puis par une pompe motorisée électrique 40 qui refoule ce débit successivement dans un échangeur thermique 42, puis dans un filtre 44 débouchant dans le circuit basse pression 6 pour fermer une boucle de drain indiquée par les flèches de circulation du fluide.

Le clapet anti-retour de sortie 38 permet de protéger l'intégrité des machines hydrauliques 2, 4, en évitant un refoulement de fluide venant du drain vers le carter de ces machines.

En particulier en cas d'incident sur le système de traitement du fluide, causé par exemple par un accident du véhicule qui perce l'échangeur thermique disposé à l'avant de ce véhicule, à côté du radiateur du moteur thermique, on évite une remontée de fluide pouvant contenir des particules, vers les machines hydrauliques qui sont des composants fragiles et chers.

L'échangeur thermique 42 peut notamment transmettre ses calories à un circuit d'eau de refroidissement, ou à un flux d'air extérieur. On notera que la boucle de drain commence par la première machine hydraulique 2 travaillant généralement en moteur et qui peut s'échauffer plus que la deuxième 4, ce qui favorise son refroidissement
La pompe motorisée 40 constitue un moyen de contrôle du débit formant un balayage dans les carter des deux machines 2, 4, qui remplit la fonction de drainage de ces carters, ainsi que de refroidissement des parties internes, et de rinçage de ces parties pour emmener des impuretés qui se trouveraient dedans.

La pompe motorisée 40 doit vaincre les pertes de charge venant de la traversée des carters des machines hydrauliques 2, 4 et des éléments de traitement du fluide, pour effectuer la circulation.

En réglant la vitesse de la pompe motorisée 40 on peut ajuster le débit qui est le même dans les deux carters, en fonction de la température des machines hydrauliques 2, 4 qui peut être mesurée directement, ou estimée d'après des caractéristiques de fonctionnement de cette pompe entraînant un échauffement type, notamment le débit et la pression, pour effectuer une régulation de cette température.

On notera que le débit de la boucle de drain passe dans le même sens dans le filtre 44, sans utiliser de composant pour redresser ce flux.

On notera aussi que ce débit est faible par rapport au flux principal traversant les machines hydrauliques 2, 4 et délivrant la puissance. L'échangeur 42 et le filtre 44 travaillent avec un débit contrôlé commandé par la pompe motorisée 40, réduit par rapport au flux principal, ce qui permet avec des éléments de traitement plus petits de diminuer les pertes de puissance dans ce traitement du fluide par rapport à un traitement du flux principal.

On peut notamment prévoir pour une application sur un véhicule hybride présenté par le document de l'art antérieur, comprenant un débit de flux principal dans les machines hydrauliques qui est de l'ordre de 100l/mn, un débit de la boucle de drain de l'ordre de 101/mn. L'écoulement dans cette boucle de drain est ainsi optimisé en fonction de ses besoins propres.

En particulier la pompe motorisée 40 peut servir à détecter un colmatage du filtre 44, en mesurant sa puissance consommée ou sa pression de sortie, ce qui permet alors d'éviter le montage d'un clapet by-pass en parallèle de ce filtre.

En complément on prévoit sur l'entrée de la pompe motorisée 40 formant un point du circuit à faible pression, une sortie vers l'extérieur fermée par un moyen de purge 46 formant un dispositif de fermeture, permettant une désaération et une purge du fluide traversant la boucle de drain.

Avantageusement on utilise un moyen de purge 46 comprenant un flotteur détectant la présence d'air, le mouvement de ce flotteur causé par la présence d'air ouvrant automatiquement la sortie pour laisser sortir cet air.

On peut aussi effectuer par ce même moyen de purge 46, un remplissage du circuit facilité par la faible pression à cet endroit.

En option le clapet anti-retour d'entrée 32 peut comporter une commande permettant de fermer entièrement le passage du conduit d'entrée 30. On a alors en activant la pompe motorisée 40, la génération d'une forte dépression en amont de cette pompe qui facilite le dégazage du fluide dans cette zone, et son évacuation par le moyen de purge 46.

De plus la dépression en amont de la pompe motorisée 40 peut entraîner un vide partiel des carters des machines hydrauliques 2, 4, ce qui limite le brassage du fluide contenu dedans et améliore le rendement.

En complément on peut disposer un clapet anti-retour supplémentaire de contournement ou « shuntage » de la pompe motorisée 40, disposé en parallèle de cette pompe, comprenant un passage libre de l'amont vers l'aval, qui donne quand même un débit dans la boucle de drain avec la pompe arrêtée si la différence de pression le permet naturellement.

On obtient un fonctionnement similaire de ce circuit, avec un passage libre du fluide vers la sortie en parallèle de la pompe motorisée 40, si par exemple les carters des machines hydrauliques 2, 4 génèrent un débit plus important que celui absorbé par cette pompe.

La figure 2 présente un circuit hydraulique similaire comprenant un petit réservoir intermédiaire à la pression atmosphérique 48 disposé en sortie de la deuxième machine hydraulique 4, après le clapet anti-retour de sortie 38.

La pompe motorisée 40 puise alors le fluide dans le réservoir intermédiaire 48, pour lui faire traverser l'échangeur thermique 42 et le filtre 44, et obtenir en sortie une pression suffisante permettant de recharger l'accumulateur basse pression 8.

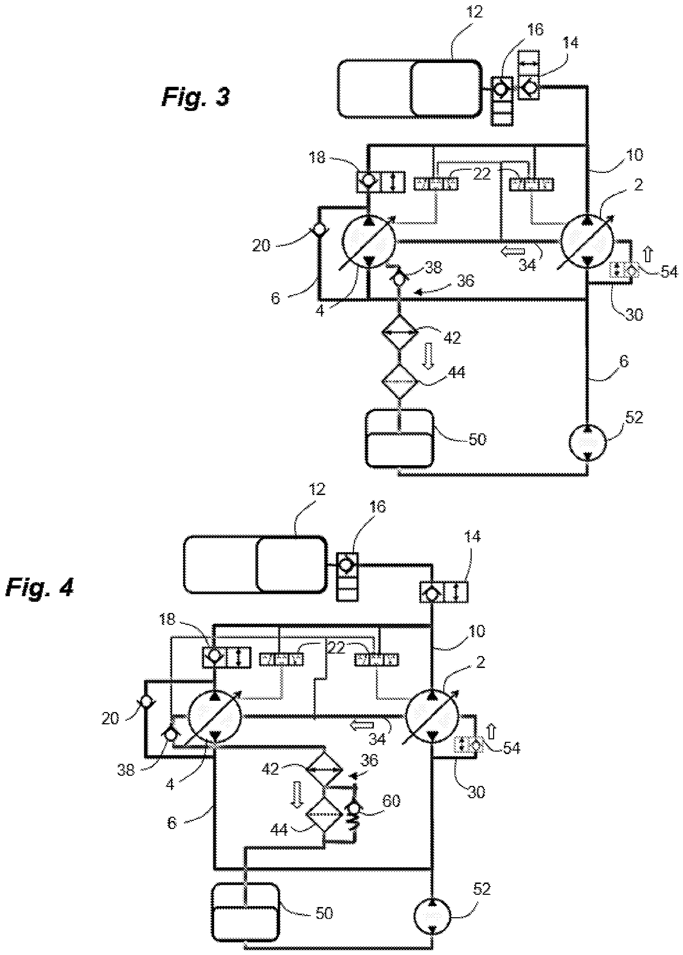

La figure 3 présente un circuit hydraulique comprenant un circuit basse pression ne comportant pas d'accumulateur, et une sortie de la boucle de drain qui débouche dans un réservoir à la pression atmosphérique 50. Une pompe de gavage 52 puise le fluide dans ce réservoir 50, pour alimenter le circuit basse pression 6 en générant la pression suffisante pour cela.

Le conduit d'entrée 30 de la boucle de drain comporte une vanne commandée d'entrée 54 comprenant dans une première position un passage libre dans les deux sens, et dans une deuxième position un clapet anti-retour permettant un passage libre du flux venant du carter de la première machine 2, vers le circuit basse pression 6 en amont afin d'éviter une surpression dans ce carter.

La vanne commandée d'entrée 54 contrôlant le débit de la boucle de drain peut être une électrovanne fonctionnant en tout rien, éventuellement fuyante lorsqu'elle est fermée pour permettre un débit minimum, ou une électrovanne proportionnelle. On peut aussi utiliser un régulateur mécanique du type conjoncteur-disjoncteur, qui fonctionne automatiquement par différence de pression.

Le conduit de sortie 36 venant de la deuxième machine hydraulique 4, comporte successivement en série le clapet anti-retour de sortie 38, l'échangeur thermique 42 et le filtre 44. Il n'est pas prévu de pompe motorisée sur ce conduit de sortie 36.

On obtient un débit naturel dans la boucle de drain utilisant la pression générée par la pompe de gavage 52 dans le circuit basse pression 6, qui est piloté par la vanne commandée 54 en oscillant entre ses deux positions.

On notera que pour ce circuit hydraulique la désaération ainsi que la purge du fluide se font automatiquement par le passage de ce fluide sortant de la boucle de drain, dans le réservoir à la pression atmosphérique 50.

La figure 4 présente un circuit hydraulique équipé d'un réservoir à la pression atmosphérique 50, comprenant sur le conduit de sortie 36 de la boucle de drain, en parallèle du filtre 44, un clapet by-pass 60 équipé d'un ressort de tarage.

On a alors dans le cas où le filtre 44 se colmate, avec une différence de pression aux entrées de ce filtre supérieure à la pression de tarage du clapet by-pass 60, un passage automatique du fluide de la boucle de drain par ce clapet by-pass.

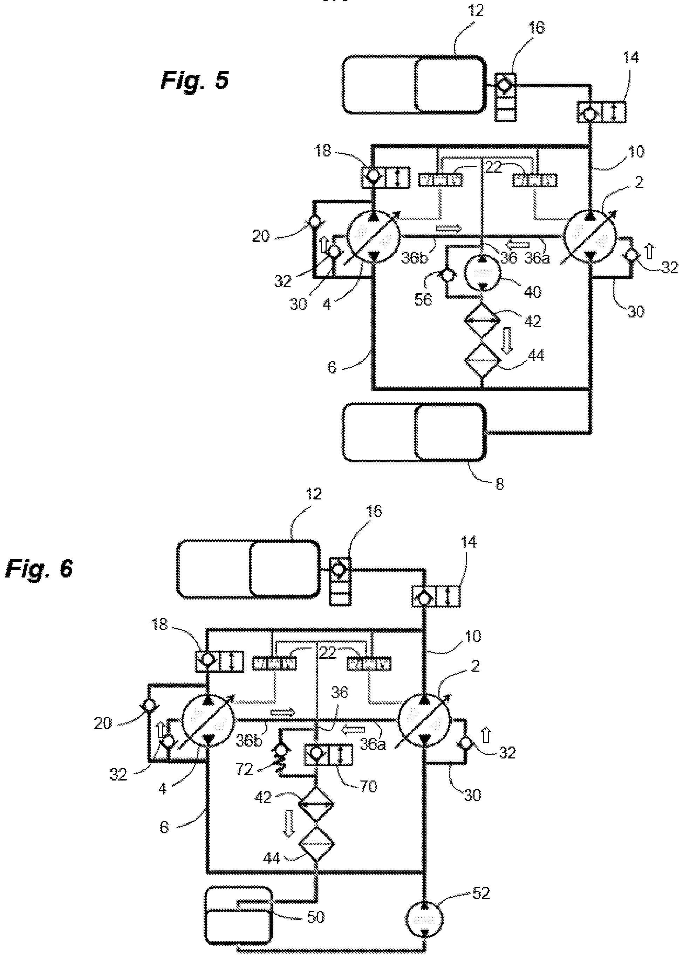

La figure 5 présente un circuit hydraulique équipé d'un accumulateur basse pression 8 sur le circuit basse pression 6, comprenant pour chaque machine hydraulique 2, 4 un conduit d'entrée particulier 30 comportant chacun son clapet anti-retour d'entrée 32, qui alimente de manière individuelle son carter à partir du circuit basse pression 6.

Les deux conduits de sortie 36a, 36b propres à chaque machine hydraulique 2, 4, se rejoignent dans un unique conduit de sortie 36 comprenant successivement la pompe motorisée 40 équipée d'un clapet anti-retour supplémentaire de contournement 56 disposé en parallèle de cette pompe, puis l'échangeur thermique 42 et le filtre 44. Dans ce circuit il n'y a pas de clapet anti-retour de sortie, qui peut être mis en complément.

On obtient pour chaque machine hydraulique 2, 4 une alimentation du carter venant du circuit basse pression 6, qui leur donne un débit venant directement des éléments de traitement du fluide. On a alors une même qualité de température et de pureté du fluide alimentant ces machines.

La figure 6 présente un circuit hydraulique équipé d'un réservoir à la pression atmosphérique 50, comprenant pour chaque machine hydraulique 2, 4 un conduit d'entrée particulier 30.

L'unique conduit de sortie 36 recevant en parallèle le fluide des deux machines 2, 4, comporte une vanne commandée de sortie 70 comprenant dans une première position un passage libre dans les deux sens, et dans une deuxième position un clapet anti-retour permettant un passage libre du flux vers l'amont de la boucle de drain pour éviter une surpression en sortie.

Cette vanne commandée de sortie 70 peut comporter les différentes caractéristiques présentées pour la vanne commandée d'entrée 54 disposée en entrée de la boucle de drain 30 sur le circuit hydraulique de la figure 3. Elle fonctionne de la même manière, pour réguler le débit de cette boucle de drain.

Un clapet anti-retour taré de contournement 72 disposé en parallèle de la vanne commandée de sortie 70, comporte un ressort de tarage permettant un écoulement du fluide de l'amont vers l'aval à partir d'un seuil de différence de pression.

En variante on peut disposer sur chaque conduit de sortie 36a, 36b venant d'une machine hydraulique 2, 4, une vanne commandée de sortie propre refoulant alors le fluide vers les éléments de traitement 42, 44 qui sont communs pour ces deux machines. On peut ainsi avec chaque vanne commandée de sortie propre ajuster le débit de la boucle de drain de manière individuelle pour chaque machine hydraulique 2, 4, en fonction de ses besoins particuliers.

D'une manière générale on dispose ainsi une boucle de drain indépendante du flux principal transmettant la puissance au travers des machines hydrauliques 2, 4, comportant à chaque fois un moyen de commande du débit permettant d'optimiser son flux en fonction des conditions de fonctionnement de ces machines. On permet une optimisation de ce débit qui assure à la fois des bonnes conditions de fonctionnement des machines garantissant leurs durées de vie, ainsi qu'une consommation minimum d'énergie.

D'une manière générale le circuit hydraulique suivant l'invention peut être utilisé avec différents types de transmission, la transmission présentée dans le document de l'art antérieur cité ci-dessus étant donnée seulement à titre d'exemple d'utilisation de ce circuit hydraulique.

## Revendications

1. Circuit hydraulique disposant d'au moins une machine hydraulique de puissance (2, 4) reliée à un circuit basse pression (6) et à un circuit haute pression (10) transmettant cette puissance, la machine étant équipée d'un drain qui permet un écoulement de fuites internes dans son carter vers un accumulateur basse pression (8) ou un réservoir à la pression atmosphérique (50), ledit circuit hydraulique comportant un conduit d'entrée (30) reliant le circuit basse pression (6) au carter de la machine, et un conduit de sortie (36) formant le drain recevant le débit du conduit d'entrée pour le conduire au réservoir (8, 50), comprenant un échangeur thermique (42) et un filtre (44) formant les éléments de traitement du fluide pour la totalité du circuit hydraulique, ce circuit comportant de plus un moyen de contrôle du débit (40, 54, 70) dans les conduits d'entrée et de sortie, le circuit basse pression (6) comportant un accumulateur basse pression (8), ledit circuit hydraulique étant **caractérisé en ce que** le moyen de contrôle du débit comprend une pompe motorisée (40) disposée sur le conduit de sortie (36), qui débite dans cet accumulateur.

2. Circuit hydraulique selon la revendication 1, **caractérisé en ce que** le conduit d'entrée (30) possède un clapet anti-retour d'entrée (32) empêchant le refoulement vers le circuit basse pression (6), pouvant comporter un ressort de tarage.

3. Circuit hydraulique selon la revendication 2, **caractérisé en ce que** le clapet anti-retour d'entrée (32) comporte une position fermée dans les deux sens, qui peut être commandée.

4. Circuit hydraulique selon l'une quelconque des revendications 1 à 3, **caractérisé en ce qu'**il comporte entre les machines hydrauliques (2, 4) et la pompe motorisée (40), une sortie vers l'extérieur comprenant un dispositif de fermeture (46), permettant une désaération du fluide.

5. Circuit hydraulique selon l'une quelconque des revendications 1 à 3, **caractérisée en ce qu'**il comporte un réservoir intermédiaire à la pression atmosphérique (48), disposé entre les machines hydrauliques (2, 4) et la pompe motorisée (40).

6. Procédé de contrôle d'un circuit hydraulique selon l'une quelconque des revendications 1 à 5, **caractérisé en ce qu'**il détecte un colmatage du filtre (44) en mesurant des caractéristiques de fonctionnement de la pompe motorisée (40).

7. Circuit hydraulique disposant d'au moins une machine hydraulique de puissance (2, 4) reliée à un circuit basse pression (6) et à un circuit haute pression (10) transmettant cette puissance, la machine étant équipée d'un drain qui permet un écoulement de fuites internes dans son carter vers un accumulateur basse pression (8) ou un réservoir à la pression atmosphérique (50), ledit circuit hydraulique comportant un conduit d'entrée (30) reliant le circuit basse pression (6) au carter de la machine, et un conduit de sortie (36) formant le drain recevant le débit du conduit d'entrée pour le conduire au réservoir (8, 50), comprenant un échangeur thermique (42) et un filtre (44) formant les éléments de traitement du fluide pour la totalité du circuit hydraulique, ce circuit comportant de plus un moyen de contrôle du débit (40, 54, 70) dans les conduits d'entrée et de sortie, le circuit basse pression (6) comportant un réservoir à la pression atmosphérique (50), ledit circuit hydraulique étant **caractérisé en ce que** le moyen de contrôle du débit comprend une vanne commandée (54) disposée sur le conduit d'entrée (30).

8. Circuit hydraulique selon la revendication 7, **caractérisé en ce que** la vanne commandée (54) comporte une position de passage libre, et une position équipée d'un clapet anti-retour bloquant le passage vers les machines hydrauliques (2, 4).

9. Circuit hydraulique selon l'une quelconque des revendications 1 à 5, 7 et 8, **caractérisé en ce que** le conduit de sortie (36) comporte un clapet anti-retour de sortie (38) disposé en sortie des machines hydrauliques (2, 4), qui bloque un retour vers ces machines.

10. Circuit hydraulique selon l'une quelconque des revendications 1 à 5 et 7 à 9, **caractérisé en ce qu'**il comporte plusieurs machines hydrauliques (2, 4) alimentées chacune par un conduit d'entrée indépendant (30) venant directement du circuit basse pression (6).

11. Véhicule automobile hybride disposant d'une chaîne de traction utilisant l'énergie hydraulique, **caractérisé en ce qu'**il comporte un circuit hydraulique réalisé selon l'une quelconque des revendications 1 à 5 et 7 à 10.

## Patentansprüche

1. Hydraulikkreislauf, der über mindestens eine hydraulische Leistungsmaschine (2, 4) verfügt, die mit einem Niederdruckkreislauf (6) und einem Hochdruckkreislauf (10) verbunden ist, die diese Leistung übertragen, wobei die Maschine mit einem Abfluss ausgestattet ist, der ein Abfließen interner Lecks in ihr Gehäuse zu einem Niederdruckspeicher (8) oder einem Speicher mit Luftdruck (50) erlaubt, wobei der Hydraulikkreislauf eine Eingangsleitung (30) umfasst, die den Niederdruckkreislauf (6) mit dem Gehäuse der Maschine verbindet, und eine Ausgangsleitung (36), die den Abfluss bildet, der den Durchfluss der Eingangsleitung empfängt, um ihn zu dem Speicher (8, 50) zu führen, der einen Wärmeaustauscher (42) und ein Filter (44) umfasst, die die Behandlungselemente des Fluids für den gesamten Hydraulikkreislauf bilden, wobei dieser Kreislauf außerdem ein Mittel zum Steuern des Durchflusses (40, 54, 70) in der Eingangs- und Ausgangsleitung umfasst, wobei der Niederdruckkreislauf (6) einen Niederdruckspeicher (8) umfasst, Hydraulikkreislauf **dadurch gekennzeichnet, dass** das Mittel zum Steuern des Durchflusses eine motorisierte Pumpe (40) umfasst, die auf der Ausgangsleitung (36), die in diesen Speicher speist, angeordnet ist.

2. Hydraulikkreislauf nach Anspruch 1, **dadurch gekennzeichnet, dass** die Eingangsleitung (30) ein Eingangsrückschlagventil (32) besitzt, das das Rückströmen zu dem Niederdruckkreislauf (6) verhindert, das eine Abgleichfeder umfassen kann.

3. Hydraulikkreislauf nach Anspruch 2, **dadurch gekennzeichnet, dass** das Eingangsrückschlagventil (32) eine geschlossene Position in die zwei Richtungen umfasst, die gesteuert werden kann.

4. Hydraulikkreislauf nach einem der Ansprüche 1 bis 3, **dadurch gekennzeichnet, dass** sie zwischen den hydraulischen Maschinen (2, 4) und der motorisierten Pumpe (40) einen Ausgang nach außen umfasst, der eine Schließvorrichtung (46) umfasst, die ein Entlüften des Fluids erlaubt.

5. Hydraulikkreislauf nach einem der Ansprüche 1 bis 3, **dadurch gekennzeichnet, dass** er einen Zwischenspeicher mit Luftdruck (48) umfasst, der zwischen den hydraulischen Maschinen (2, 4) und der motorisierten Pumpe (40) angeordnet ist.

6. Verfahren zum Steuern eines Hydraulikkreislaufs nach einem der Ansprüche 1 bis 5, **dadurch gekennzeichnet, dass** es ein Verstopfen des Filters (44) erfasst, indem es Betriebsmerkmale der motorisierten Pumpe (40) misst.

7. Hydraulikkreislauf, der über mindestens eine hydraulische Leistungsmaschine (2, 4) verfügt, die mit einem Niederdruckkreislauf (6) und einem Hochdruckkreislauf (10) verbunden ist, die diese Leistung übertragen, wobei die Maschine mit einem Abfluss ausgestattet ist, der ein Abfließen interner Lecks in ihr Gehäuse zu einem Niederdruckspeicher (8) oder einem Speicher mit Luftdruck (50) erlaubt, wobei der Hydraulikkreislauf eine Eingangsleitung (30) umfasst, die den Niederdruckkreislauf (6) mit dem Gehäuse der Maschine verbindet, und eine Ausgangsleitung (36), die den Abschluss bildet, der den Durchfluss der Eingangsleitung empfängt, um ihn zu dem Speicher (8, 50) zu führen, der einen Wärmeaustauscher (42) und ein Filter (44) umfasst, die die Behandlungselemente des Fluids für den gesamten Hydraulikkreislauf bilden, wobei dieser Kreislauf außerdem ein Mittel zum Steuern des Durchflusses (40, 54, 70) in der Eingangs- und Ausgangsleitung umfasst, wobei der Niederdruckkreislauf (6) einen Speicher mit Luftdruck (50) umfasst, Hydraulikkreislauf **dadurch gekennzeichnet, dass** das Mittel zum Steuern des Durchflusses ein gesteuertes Ventil (54), das auf der Eingangsleitung (30) angeordnet ist, umfasst.

8. Hydraulikkreislauf nach Anspruch 7, **dadurch gekennzeichnet, dass** das gesteuerte Ventil (54) eine Position für freies Durchgehen und eine Position, die mit einem Rückschlagventil ausgestattet ist, das das Durchgehen zu den hydraulischen Maschinen (2, 4) blockiert, umfasst.

9. Hydraulikkreislauf nach einem der Ansprüche 1 bis 5, 7 und 8, **dadurch gekennzeichnet, dass** die Ausgangsleitung (36) ein Ausgangsrückschlagventil (38) umfasst, das am Ausgang der Hydraulikmaschinen (2, 4) angeordnet ist, das einen Rückstrom zu diesen Maschinen blockiert.

10. Hydraulikkreislauf nach einem der Ansprüche 1 bis 5 und 7 bis 9, **dadurch gekennzeichnet, dass** er mehrere Hydraulikmaschinen (2, 4) umfasst, die jeweils von einer unabhängigen Eingangsleitung (30), die direkt von dem Niederdruckkreislauf (6) kommt, versorgt werden.

11. Hybridkraftfahrzeug, das über einen Antriebsstrang verfügt, der hydraulische Energie verwendet, **dadurch gekennzeichnet, dass** es einen Hydraulikkreislauf umfasst, der nach einem der Ansprüche 1 bis 5 und 7 bis 10 hergestellt ist.

## Claims

1. A hydraulic circuit having at least one hydraulic power machine (2, 4) connected to a low pressure circuit (6) and to a high pressure circuit (10) transmitting this power, the machine being equipped with a drain which permits a flow of internal leaks in its casing towards a low pressure accumulator (8) or a reservoir at atmospheric pressure (50), said hydraulic circuit comprising an inlet pipe (30) connecting the low pressure circuit (6) to the casing of the machine, and an outlet pipe (36) forming the drain receiving the flow from the inlet pipe so as to direct it to the reservoir (8, 50), including a heat exchanger (42) and a filter (44) forming the treatment elements of the fluid for the entirety of the hydraulic circuit, this circuit comprising in addition a flow control means (40, 54, 70) in the inlet and outlet pipes, the low pressure circuit (6) comprising a low pressure accumulator (8), said hydraulic circuit being **characterized in that** the flow control means includes a motorized pump (40) disposed on the outlet pipe (36), which discharges in this accumulator.

2. The hydraulic circuit according to Claim 1, **characterized in that** the inlet pipe (30) has a non-return inlet valve (32) preventing the backflow towards the low pressure circuit (6), being able to comprise a calibrating spring.

3. The hydraulic circuit according to Claim 2, **characterized in that** the non-return inlet valve (32) comprises a closed position in both directions, which can be controlled.

4. The hydraulic circuit according to any one of Claims 1 to 3, **characterized in that** it comprises, between the hydraulic machines (2, 4) and the motorized pump (40), an outlet towards the exterior including a closure device (46), permitting a deaeration of the fluid.

5. The hydraulic circuit according to any one of Claims 1 to 3, **characterized in that** it comprises an intermediate reservoir (48) at atmospheric pressure, disposed between the hydraulic machines (2, 4) and the motorized pump (40).

6. A method for controlling a hydraulic circuit according to any one of Claims 1 to 5, **characterized in that** it detects a clogging of the filter (44) by measuring operating characteristics of the motorized pump (40).

7. A hydraulic circuit having at least one hydraulic power machine (2, 4) connected to a low pressure circuit (6) and to a high pressure circuit (10) transmitting this power, the machine being equipped with a drain which permits a flow of internal leaks in its casing towards a low pressure accumulator (8) or a reservoir (50) at atmospheric pressure, said hydraulic circuit comprising an inlet pipe (30) connecting the low pressure circuit (6) to the casing of the machine, and an outlet pipe (36) forming the drain receiving the flow of the inlet pipe to direct it to the reservoir (8, 50), including a heat exchanger (42) and a filter (44) forming the treatment elements of the fluid for the entirety of the hydraulic circuit, this circuit comprising in addition a control means (40, 54, 70) of the flow in the inlet and outlet pipes, the low pressure circuit (6) comprising a reservoir (50) at atmospheric pressure, said hydraulic circuit being **characterized in that** the control means of the flow includes a controlled valve (54) disposed on the inlet pipe (30).

8. The hydraulic circuit according to Claim 7, **characterized in that** the controlled valve (54) comprises a free passage position, and a position equipped with a non-return valve blocking the passage towards the hydraulic machines (2, 4).

9. The hydraulic circuit according to any one of Claims 1 to 5, 7 and 8, **characterized in that** the outlet pipe (36) comprises a non-return outlet valve (38) disposed at the outlet of the hydraulic machines (2, 4), which blocks a return towards these machines.

10. The hydraulic circuit according to any one of Claims 1 to 5 and 7 to 9, **characterized in that** it comprises several hydraulic machines (2, 4) each fed by an independent inlet pipe (30) coming directly from the low pressure circuit (6).

11. A hybrid motor vehicle having a power train using hydraulic energy, **characterized in that** it comprises a hydraulic circuit realized according to any one of Claims 1 to 5 and 7 to 10.
